(19) Europäisches Patentamt
European Patent Office
Office européen des brevets

(11) **EP 3 978 267 B1**

(12) **EUROPEAN PATENT SPECIFICATION**

(45) Date of publication and mention
of the grant of the patent:
**25.02.2026 Bulletin 2026/09**

(21) Application number: **20814605.0**

(22) Date of filing: **27.05.2020**

(51) International Patent Classification (IPC):
**B60C 1/00** *(2006.01)* **B60C 9/04** *(2006.01)*
**C08L 7/00** *(2006.01)* **B60C 11/00** *(2006.01)*
**C08K 3/04** *(2006.01)* **C09D 107/00** *(2006.01)*
**C08L 9/06** *(2006.01)*

(52) Cooperative Patent Classification (CPC):
(C-Sets available)
**B60C 1/0041;** B60C 11/005; B60C 2009/0269;
B60C 2009/0276; B60C 2011/0025;
C08K 2201/006; Y02T 10/86            (Cont.)

(86) International application number:
**PCT/JP2020/020941**

(87) International publication number:
**WO 2020/241695 (03.12.2020 Gazette 2020/49)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2019 JP 2019102117**

(43) Date of publication of application:
**06.04.2022 Bulletin 2022/14**

(73) Proprietor: **The Yokohama Rubber Co., Ltd.
Hiratsuka-shi, Kanagawa 254-8601 (JP)**

(72) Inventors:
• **SUGIURA, Hiroki
Hiratsuka-shi, Kanagawa 254-8601 (JP)**
• **OZAKI, Makoto
Hiratsuka-shi, Kanagawa 254-8601 (JP)**
• **SHIMIZU, Katsunori
Hiratsuka-shi, Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
EP-B1- 2 799 247      JP-A- 2006 168 595
JP-A- 2009 006 983      JP-A- 2011 016 924
JP-A- 2012 017 048      JP-A- 2016 041 521
JP-A- 2016 113 513      JP-A- 2016 155 925
JP-A- H01 168 506      US-A1- 2012 298 275

(52) Cooperative Patent Classification (CPC): (Cont.)

C-Sets
**C09D 107/00, C08L 9/06, C08L 91/00, C08K 3/04,
C08K 3/22, C08K 5/09, C08K 5/18, C08K 5/47,
C08K 3/06**

## Description

Technical Field

The present invention relates to a pneumatic tire and particularly relates to a pneumatic tire that can achieve both reduced road noise and improved steering stability in a compatible manner.

Background Art

Pneumatic tires mainly include a pair of left and right bead portions, sidewall portions, and a tread portion that is continuous with both sidewall portions and that includes a cap tread and an undertread. A carcass ply is provided on the inner side of the tire, and both end portions of the carcass ply are folded back from the tire inner side toward the outer side to wrap a bead core.

Vehicle-derived noise of electric vehicles, using a motor as a driving source for traveling, is much smaller than that of automobiles using an internal combustion engine as the driving source for traveling. As a result, tire-derived noise (road noise) stands out as the source of noise during vehicle traveling, meaning that further reduction of road noise has been called for.

A known example approach for reducing the road noise includes reducing the spring characteristics of a tire by softening a member that constitutes a tire, such as cap tread rubber. However, the soft cap tread rubber involves a problem in that it leads to a tire with a lower rigidity, resulting in a compromised steering stability. Thus, the reduction in the road noise and the improvement in the steering stability are in a trade-off relationship.

Patent Documents 1 to 3 disclose examples of techniques for achieving reduced road noise and improved steering stability.

Citation List

Patent Literature

Patent Document 1: JP 2007-253708 A
Patent Document 2: JP 2014-80074 A
Patent Document 3: WO 2014/002631

JP2006168595 discloses a pneumatic radial tire characterized by a road noise reduction effect and a good steering stability.

Summary of Invention

Technical Problem

In view of the above, an object of the present invention is to provide a pneumatic tire that can achieve both reduced road noise and improved steering stability in a compatible manner.

Solution to Problem

As a result of diligent research, the inventors of the present invention have discovered that the above-described problem can be solved by specifying the thickness of the carcass ply, the composition of the carcass coating rubber coating the carcass ply, and the ratio of the hardness of the cap tread rubber to the storage modulus of the carcass coating rubber, and thus completed the present invention.

An embodiment of the present invention provides a pneumatic tire including:

at least a single carcass ply;
a carcass coating rubber coating the carcass ply; and
a cap tread rubber disposed on an outer side of the carcass ply in a tire radial direction,
the single carcass ply having a thickness of from 0.50 mm to 2.00 mm,
the carcass coating rubber including natural rubber and a styrene-butadiene copolymer rubber as diene rubbers and carbon black having a nitrogen adsorption specific surface area ($N_2SA$) of from 35 to 140 $m^2/g$ as a filler, wherein the nitrogen adsorption specific surface area (N$_2$SA) is a value measured in accordance with JIS K6217-2:2001 "Part 2: Determination of specific surface area - Nitrogen adsorption methods - Single-point procedures",
a blended ratio of the natural rubber being 20 parts by mass or more and a blended ratio of the carbon black being 25 parts by mass or more, per 100 parts by mass of the diene rubbers,
a hardness (Hs cap) of the cap tread rubber at 20°C, wherein the hardness (Hs cap) of the cap tread rubber is measured with a Type A durometer at a temperature of 20°C in accordance with JIS K6253, and a storage modulus (E'carcass) of the carcass coating rubber at 20°C, wherein the storage modulus (E'carcass) of the carcass coating rubber is a storage modulus measured with a viscoelasticity spectrometer at 20°C in accordance with JIS K6394 under the conditions of 10% initial strain, ± 2% amplitude, and 20 Hz frequency, satisfying a formula below:

$$5 \leq (\text{Hs cap})/(\text{E'carcass}) \leq 15.$$

Advantageous Effects of Invention

The pneumatic tire according to an embodiment of the present invention includes: at least a single carcass ply; a carcass coating rubber coating the carcass ply; and a cap tread rubber disposed on an outer side of the carcass ply in a tire radial direction. The single carcass ply has a thickness of from 0.50 mm to 2.00 mm. The carcass coating rubber contains: natural rubber and a styrene-butadiene copolymer rubber as diene rubbers; and carbon black having a nitrogen adsorption specific surface area (N$_2$SA) of from 35 to 140 m$^2$/g as a filler. A blended ratio of the natural rubber is 20 parts by mass or more and a blended ratio of the carbon black is 25 parts by mass or more, per 100 parts by mass of the diene rubbers. A hardness (Hs cap) of the cap tread rubber at 20°C and a storage modulus (E'carcass) of the carcass coating rubber at 20°C satisfy $5 \leq$ (Hs cap)/(E'carcass) $\leq 15$. Thus, a pneumatic tire that can achieve both reduced road noise and improved steering stability in a compatible manner can be provided.

As described above, softening the cap tread rubber is effective for reducing road noise, unfavorably resulting in a compromised steering stability. In an embodiment of the present invention, the thickness of the carcass ply, the composition of the carcass coating rubber coating the carcass ply, and the ratio of the hardness of the cap tread rubber to the storage modulus of the carcass coating rubber are specified, and thus, even in cases where the cap tread rubber is responsible for improving the road noise and reduces the steering stability, the carcass coating rubber serves to complement the steering stability. Thus, the reduction in the road noise and the improvement in the steering stability, which are in a trade-off relationship, can be achieved at the same time.

Description of Embodiments

The present invention will be described in further detail below.

Carcass Ply

A carcass ply used in a pneumatic tire according to an embodiment of the present invention is a member that extends between bead cores on both sides in a tire width direction and that forms a framework of the tire. "Tire width direction" is the direction parallel with the direction of the tire rotation axis. In an embodiment of the present invention, the thickness of one carcass ply needs to be from 0.50 mm to 2.00 mm. If the thickness of one carcass ply does not fall within this range, both reduced road noise and improved steering stability cannot be achieved at the same time.

The thickness of one carcass ply is more preferably from 0.70 mm to 1.80 mm. Furthermore, the thickness is even more preferably from 0.80 mm to 1.50 mm.

The type of carcass ply is not particularly limited and may be selected as appropriate from among known types. Still, for the sake of promoting the effects of embodiments of the present invention, the carcass ply preferably contains organic fibers. Examples of the organic fibers include polyester fibers, nylon fibers, aramid fibers, polyimide fibers, polyacrylate fibers, vinylon fibers, acrylic fibers, polyolefin fibers, polyurethane fibers, rayon fibers, lyocell fibers, and the like. Among these, polyethylene terephthalate fibers as polyester fibers and rayon are preferable.

Also, the angle (carcass angle) of a carcass cord forming the carcass ply relative to a tire circumferential direction is generally 90°, but a low angle such as 90° to 70° may be selected for improving steering stability. With the carcass angle thus set, the steering stability can be further improved. "Tire circumferential direction" refers to a circumferential direction with the tire rotation axis as a center axis.

Note that the carcass ply used in the pneumatic tire according to an embodiment of the present invention is not limited to a single carcass ply, and may be a plurality of carcass plies. The requirement of embodiments of the present invention that the thickness of a single carcass ply is 0.50 mm to 2.00 mm also applies to the latter case.

In an embodiment of the present invention, the composition of a carcass coating rubber for coating the carcass ply is specified. Specifically, the carcass coating rubber contains: natural rubber (NR) and a styrene-butadiene copolymer rubber (SBR) as diene rubbers; and carbon black having a nitrogen adsorption specific surface area ($N_2SA$) of from 35 to 140 $m^2/g$ as a filler, and the blended ratio of the NR is 20 parts by mass or more, and the blended ratio of the carbon black is 25 parts by mass or more, per 100 parts by mass of the diene rubbers.

If no SBR is blended, if the blended ratio of the NR is less than 20 parts by mass, if the blended ratio of the carbon black is less than 25 parts by mass, and/or if the nitrogen adsorption specific surface area ($N_2SA$) of the carbon black does not fall within the range of from 35 to 140 $m^2/g$, reduced road noise and improved steering stability cannot be achieved at the same time.

Here, from the perspective of improving the effects of embodiments of the present invention, the following forms are preferable.

(1) The blended ratio of the NR is preferably from 30 to 90 parts by mass and more preferably from 50 to 90 parts by mass, per 100 parts by mass of the diene rubbers.
(2) The blended ratio of the SBR is preferably less than 60 parts by mass, per 100 parts by mass of the diene rubbers.
(3) The blended ratio of the carbon black is preferably from 30 to 75 parts by mass, more preferably from 35 to 70 parts by mass, and particularly preferably from 35 to 65 parts by mass, per 100 parts by mass of the diene rubbers.
(4) The nitrogen adsorption specific surface area ($N_2SA$) of the carbon black is preferably from 50 to 140 $m^2/g$ and more preferably from 70 to 140 $m^2/g$.

Note that the NR according to an embodiment of the present invention includes a synthetic isoprene rubber (IR). The nitrogen adsorption specific surface area ($N_2SA$) is a value measured in accordance with JIS K6217-2:2001 "Part 2: Determination of specific surface area - Nitrogen adsorption methods - Single-point procedures".

The diene rubber used in an embodiment of the present invention can be used in combination with a diene rubber other than the NR or SBR as necessary. Examples of such diene rubbers include butadiene rubber (BR) and acrylonitrile-butadiene copolymer rubber (NBR). The molecular weight and the microstructure of the diene rubber used in an embodiment of the present invention are not particularly limited. The diene rubber may be terminal-modified with an amine, amide, silyl, alkoxysilyl, carboxyl, hydroxyl group, or the like, or may be epoxidized.

Furthermore, in addition to the components described above, various types of additives that are commonly added to carcass coating rubber, such as various types of fillers, various types of oils, anti-aging agents, plasticizers, and zinc oxide, can be blended in the carcass coating rubber. In addition, during vulcanization, known vulcanizing or crosslinking agents, vulcanizing or crosslinking accelerators can be used without limitation. Blended amounts of these additives may be any standard blended amount in the related art, so long as the object of the present invention is not hindered.

A cap tread rubber in the pneumatic tire according to an embodiment of the present invention is disposed on an outer side of the carcass ply in a tire radial direction. "Outer side in the tire radial direction" refers to the side away from the rotation axis in the tire radial direction (a direction orthogonal to the rotation axis of the pneumatic tire).

In an embodiment of the present invention, the composition of the cap tread rubber is not particularly limited and can be selected as appropriate, as long as the composition can satisfy the relationship (Hs cap)/(E'carcass) described below.

For example, various types of components commonly blended in the cap tread rubber, such as diene rubbers, various types of fillers such as silica and carbon black, coupling agents, various types of oils, anti-aging agents, plasticizers, and zinc oxide, can be blended. In addition, during vulcanization, known vulcanizing or crosslinking agents, vulcanizing or crosslinking accelerators can be used without limitation. Blended amounts of these additives may be any standard blended amount in the related art, so long as the object of the present invention is not hindered.

The maximum thickness of the cap tread rubber (maximum length from the contact surface with the undertread to the tire surface in the tire radial direction) after vulcanization is not particularly limited, but is, for example, from 2 mm to 20 mm and preferably from 2 mm to 15 mm.

Furthermore, the blended ratio of each component of the other members of the pneumatic tire according to an embodiment of the present invention, for example, the members configuring the bead portion, the sidewall portion, and the like is not particularly limited and can be selected as appropriate.

For example, various commonly blended components, such as diene rubbers, various types of fillers, various types of oils, anti-aging agents, plasticizers, and zinc oxide, can be blended as rubber compositions of other members. In addition, during vulcanization, known vulcanizing or crosslinking agents, vulcanizing or crosslinking accelerators can be used without limitation. Blended amounts of these additives may be any standard blended amount in the related art, so long as the object of the present invention is not hindered.

In the pneumatic tire according to an embodiment of the present invention, the hardness (Hs cap) of the cap tread rubber at 20°C and the storage modulus (E'carcass) of the carcass coating rubber at 20°C need to satisfy a formula below.

$$5 \leq (\text{Hs cap})/(\text{E'carcass}) \leq 15.$$

That is, since (Hs cap)/(E'carcass) is within the range of from 5 to 15, as described above, even in cases where the cap tread rubber is responsible for improving road noise and reduces steering stability, the carcass coating rubber serves to complement the steering stability. Thus, the reduction in the road noise and the improvement in the steering stability, which are in a trade-off relationship, can be achieved at the same time.

In embodiments of the present invention, "hardness" (Hs cap) of the cap tread rubber at 20°C is a rubber hardness measured with a Type A durometer at a temperature of 20°C in accordance with JIS K6253.

In embodiments of the present invention, "storage modulus" (E'carcass) of the carcass coating rubber at 20°C is a storage modulus measured with a viscoelasticity spectrometer (available from Toyo Seiki Seisaku-sho, Ltd.) at 20°C in accordance with JIS K6394 under the conditions of 10% initial strain, ± 2% amplitude, and 20 Hz frequency.

The hardness (Hs cap) of the cap tread rubber at 20°C and the storage modulus (E'carcass) of the carcass coating rubber at 20°C can be adjusted by, for example, increasing or decreasing the amount of a plasticizer, a filler, a vulcanizing agent, or crosslinking agent.

From the perspective of further improving the effects of embodiments of the present invention, the ratio (Hs cap)/(E'carcass) is preferably from 5 to 14, more preferably from 5 to 13, and particularly preferably from 5 to 12.

Additionally, the pneumatic tire according to an embodiment of the present invention can be manufactured according to a known method for manufacturing a pneumatic tire, and is preferably used for a passenger vehicle application, for example.

Example

The present invention will be described in further detail by way of examples and comparative examples, but the present invention is not limited by these examples.

Examples 1 and 2 and Comparative Examples 1 to 3

For the composition (parts by mass) shown in Table 1, the components other than the vulcanization accelerators and sulfur were kneaded for 5 minutes in a 16-L sealed Banbury mixer. The rubber was then discharged outside of the mixer and cooled at room temperature. Thereafter, the rubber was placed in an identical mixer again, and the vulcanization accelerators and sulfur were then added to the mixture and further kneaded to obtain various carcass coating rubber compositions.

Next, polyester fibers were used as the carcass cords forming the carcass ply, and the cords were coated with the rubber compositions according to a known method, and vulcanization was performed. The thicknesses of the carcass plies were as shown in Table 1, and the average thickness of the carcass coating rubber (average value of the thickness of the carcass coating rubber in the tire radial direction) was 0.4 mm, and the number of carcass cords per unit width of 50 mm was 50.

The cap tread rubber was prepared according to a known method, and the amount of a plasticizer or a filler was increased or decreased to obtain the cap tread rubber having various hardnesses shown in Table 1.

The hardness (Hs cap) of the cap tread rubber at 20°C is measured with a Type A durometer at a temperature of 20°C in accordance with JIS K6253.

The storage moduli (E'carcass) of the carcass coating rubber compositions at 20°C were measured with a viscoelasticity spectrometer (available from Toyo Seiki Seisaku-sho, Ltd.) at 20°C in accordance with JIS K6394 under the conditions of 10% initial strain, ± 2% amplitude, and 20 Hz frequency. The results are shown in Table 1.

Various pneumatic tires having a tire size of 245/40R18 were manufactured by incorporating one carcass ply coated with the carcass coating rubber and the cap tread rubber. Note that the carcass angle was 90°. Furthermore, the conditions of the members other than the carcass ply and the cap tread rubber were identical among the various pneumatic tires.

The following evaluations were made for each of the various pneumatic tires obtained. The results are shown in Table 1.

Steering stability: Each of the test tires was mounted on a wheel having a rim size of 18×8.5J and assembled on a test vehicle, and sensory evaluations were performed by a test driver on a paved-road test course under the condition of air pressure of 240 kPa. The evaluations were made on a 5-point scale, with the "3" point serving as a standard for relative evaluations.

    5: A significant improvement in steering stability was observed compared to the "3" point.
    4: Some improvement in steering stability was observed compared to the "3" point.

3: Standard

2: The steering stability was inferior to that with the "3" point.

1: The steering stability was significantly inferior to that with the "3" point.

Road noise: Each of the test tires was mounted on a wheel having a rim size of 18×8.5J and assembled on a test vehicle, and sensory evaluations on road noise while running were performed by a test driver under the condition of air pressure of 240 kPa. The evaluations were made on a 5-point scale, with the "3" point serving as a standard for relative evaluations.

5: A significant improvement in road noise was observed compared to the "3" point.

4: Some improvement in road noise was observed compared to the "3" point.

3: Standard

2: Some road noise was sensed compared to the "3" point.

1: Significant road noise was sensed compared to the "3" point.

[Table 1]

| | Comparative Example 1 | Example 1 | Example 2 | Comparative Example 2 | Comparative Example 3 |
|---|---|---|---|---|---|
| NR *1 | 60 | 60 | 60 | 10 | 60 |
| SBR *2 | 40 | 40 | 40 | 90 | 40 |
| Carbon black 1 *3 | 45 | 65 | 65 | 65 | - |
| Carbon black 2 *4 | - | - | - | - | 65 |
| Zinc oxide *5 | 5 | 5 | 5 | 5 | 5 |
| Stearic acid *6 | 2 | 2 | 2 | 2 | 2 |
| Anti-aging agent *7 | 1 | 1 | 1 | 1 | 1 |
| Aroma oil *8 | 5 | 5 | 5 | 5 | 5 |
| Vulcanization accelerator *9 | 1 | 1 | 1 | 1 | 1 |
| Sulfur *10 | 3 | 3 | 3 | 3 | 3 |
| Hardness (Hs) of cap tread rubber at 20°C | 65 | 63 | 60 | 63 | 63 |
| Storage modulus (E') of carcass coating rubber at 20°C | 3.5 | 8.2 | 8.2 | 9.7 | 5.4 |
| (Hs)/(E') | 19 | 8 | 7 | 6 | 12 |
| Thickness (mm) of carcass ply | 1 | 1 | 1.2 | 1 | 1 |
| Steering stability | 3.0 | 4.0 | 4.5 | 4.0 | 2.0 |

(continued)

| | Comparative Example 1 | Example 1 | Example 2 | Comparative Example 2 | Comparative Example 3 |
|---|---|---|---|---|---|
| Road noise | 3.0 | 5.0 | 4.5 | 3.5 | 4.0 |
| *1: NR (TSR20)<br>*2: SBR (Nipol 1502, available from Zeon Corporation)<br>*3: Carbon black 1 (SEAST N, available from Tokai Carbon Co., Ltd.; $N_2SA = 74$ m$^2$/g)<br>*4: Carbon black 2 (SEAST V, available from Tokai Carbon Co., Ltd.; $N_2SA = 27$ m$^2$/g)<br>*5: Zinc oxide (Zinc Oxide III, available from Seido Chemical Industry Co., Ltd.)<br>*6: Stearic acid (Stearic Acid YR, available from NOF Corp.)<br>*7: Anti-aging agent (Santoflex 6PPD, available from Flexsys)<br>*8: Aroma Oil (Diana Process NH-60, available from Idemitsu Kosan, Co., Ltd.)<br>*9: Vulcanization accelerator (NOCCELER NS-P, available from Ouchi Shinko Chemical Industrial Co., Ltd.)<br>* 10: Sulfur (MUCRON OT-20, available from Shikoku Chemicals Corporation) | | | | | |

As is clear from Table 1 above, in Comparative Example 1, the ratio (Hs cap)/(E'carcass) exceeded the upper limit specified in an embodiment of the present invention, and thus the road noise and the steering stability failed to be provided in a compatible manner.

In the pneumatic tires prepared in Examples 1 and 2, the thickness of the carcass ply, the composition of the carcass coating rubber coating the carcass ply, and the ratio of the hardness of the cap tread rubber to the storage modulus of the carcass coating rubber were specified, and thus, both reduced road noise and improved steering stability were achieved in a compatible manner compared to Comparative Example 1.

In Comparative Example 2, the blended ratio of NR in the carcass coating rubber was less than the lower limit specified in an embodiment of the present invention, and thus the road noise failed to be improved.

In Comparative Example 3, the nitrogen adsorption specific surface area ($N_2SA$) of the carbon black did not fall within the range specified in an embodiment of the present invention, and thus the steering stability degraded.

Comparative Example 4 and Examples 3 and 4

These were identical to the above-described examples except that two carcass plies coated with carcass coating rubber were used in Examples 1 and 2 and Comparative Examples 1 to 3 above, and the pneumatic tires produced were set to have a tire size of 195/65R15, a rim size of 15×6J, and an air pressure of 230 kPa. The results are shown in Table 2.

[Table 2]

| | Comparative Example 4 | Example 3 | Example 4 |
|---|---|---|---|
| NR *1 | 60 | 60 | 60 |
| SBR *2 | 40 | 40 | 40 |
| Carbon black 1 *3 | 45 | 65 | 65 |
| Carbon black 2 *4 | - | - | - |
| Zinc oxide *5 | 5 | 5 | 5 |
| Stearic acid *6 | 2 | 2 | 2 |
| Anti-aging agent *7 | 1 | 1 | 1 |
| Aroma oil *8 | 5 | 5 | 5 |
| Vulcanization accelerator *9 | 1 | 1 | 1 |
| Sulfur *10 | 3 | 3 | 3 |
| Hardness (Hs) of cap tread rubber at 20°C | 55 | 53 | 51 |
| Storage modulus (E') of carcass coating rubber at 20°C | 3.5 | 8.2 | 8.2 |
| (Hs)/(E') | 16 | 6 | 6 |
| Thickness (mm) of each carcass ply | 1 | 1 | 1.2 |

(continued)

|  | Comparative Example 4 | Example 3 | Example 4 |
|---|---|---|---|
| Steering stability | 3.0 | 3.5 | 4.0 |
| Road noise | 3.0 | 5.0 | 4.5 |

From the results in Table 2, in the pneumatic tires prepared in Examples 3 and 4, the thickness of each carcass ply, the composition of the carcass coating rubber coating the carcass ply, and the ratio of the hardness of the cap tread rubber to the storage modulus of the carcass coating rubber were specified, and thus, the road noise was reduced, while the steering stability was improved or maintained compared to Comparative Example 4.

**Claims**

1.  A pneumatic tire comprising:

    at least a single carcass ply;
    a carcass coating rubber coating the carcass ply; and
    a cap tread rubber disposed on an outer side of the carcass ply in a tire radial direction,
    the single carcass ply having a thickness of from 0.50 mm to 2.00 mm,
    the carcass coating rubber comprising natural rubber and a styrene-butadiene copolymer rubber as diene rubbers and carbon black having a nitrogen adsorption specific surface area ($N_2SA$) of from 35 to 140 $m^2/g$ as a filler, wherein the nitrogen adsorption specific surface area ($N_2SA$) is a value measured in accordance with JIS K6217-2:2001 "Part 2: Determination of specific surface area - Nitrogen adsorption methods - Single-point procedures",
    a blended ratio of the natural rubber being 20 parts by mass or more and a blended ratio of the carbon black being 25 parts by mass or more, per 100 parts by mass of the diene rubbers, and
    a hardness (Hs cap) of the cap tread rubber at 20°C, wherein the hardness (Hs cap) of the cap tread rubber is measured with a Type A durometer at a temperature of 20°C in accordance with JIS K6253, and a storage modulus (E'carcass) of the carcass coating rubber at 20°C, wherein the storage modulus (E'carcass) of the carcass coating rubber is a storage modulus measured with a viscoelasticity spectrometer at 20°C in accordance with JIS K6394 under the conditions of 10% initial strain, ± 2% amplitude, and 20 Hz frequency, satisfying a formula below:

$$5 \le (\text{Hs cap})/(\text{E'carcass}) \le 15.$$

2.  The pneumatic tire according to claim 1, wherein the blended ratio of the natural rubber is from 30 to 90 parts by mass, per 100 parts by mass of the diene rubbers.

3.  The pneumatic tire according to claim 1, wherein the blended ratio of the natural rubber is from 50 to 90 parts by mass, per 100 parts by mass of the diene rubbers.

4.  The pneumatic tire according to claim 1, wherein the blended ratio of the carbon black is from 30 to 75 parts by mass, per 100 parts by mass of the diene rubbers.

5.  The pneumatic tire according to claim 1, wherein the blended ratio of the carbon black is from 35 to 70 parts by mass, per 100 parts by mass of the diene rubbers.

6.  The pneumatic tire according to claim 1, wherein the nitrogen adsorption specific surface area ($N_2SA$) of the carbon black is from 50 to 140 $m^2/g$.

7.  The pneumatic tire according to claim 1, wherein the carcass ply comprises organic fibers, and the organic fibers are made of polyethylene terephthalate or rayon.

8.  The pneumatic tire according to claim 1, wherein a thickness of the single carcass ply is from 0.70 mm to 1.80 mm.

9. The pneumatic tire according to claim 1, wherein the hardness (Hs cap) of the cap tread rubber at 20°C and the storage modulus (E'carcass) of the carcass coating rubber at 20°C satisfy a formula below:

$$5 \leq (\text{Hs cap})/(\text{E'carcass}) \leq 14.$$

10. The pneumatic tire according to claim 1, wherein the hardness (Hs cap) of the cap tread rubber at 20°C and the storage modulus (E'carcass) of the carcass coating rubber at 20°C satisfy a formula below:

$$5 \leq (\text{Hs cap})/(\text{E'carcass}) \leq 13.$$

**Patentansprüche**

1. Luftreifen, umfassend:

   mindestens eine einzige Karkassenlage;
   eine Karkassenbeschichtungs-Gummibeschichtung, die die Karkassenlage beschichtet; und
   einen Decklaufflächengummi, der auf einer äußeren Seite der Karkassenlage in einer Reifenradialrichtung angeordnet ist;
   wobei die einzelne Karkassenlage eine Dicke von 0,50 mm bis 2,00 mm aufweist,
   wobei der Karkassenbeschichtungsgummi Naturkautschuk und einen Styrol-Butadien-Copolymerkautschuk als Dienkautschuke und Ruß mit einer stickstoffadsorptionsspezifischen Oberfläche ($N_2$SA) von 35 bis 140 m$^2$/g als Füllstoff umfasst, wobei die stickstoffadsorptionsspezifische Oberfläche ($N_2$SA) ein Wert ist, der gemessen wird gemäß JIS K6217-2:2001 "Part 2: Determination of specific surface area - Nitrogen adsorption methods - Single-point procedures" (Teil 2: Bestimmung des spezifischen Oberflächenbereichs - Stickstoffadsorptionsverfahren - Einzelpunktverfahren),
   wobei ein Mischungsverhältnis des Naturkautschuks 20 Massenteile oder mehr und ein Mischungsverhältnis des Rußes 25 Massenteile oder mehr beträgt, bezogen auf 100 Massenteile der Dienkautschuke, und
   eine Härte (Hs cap) des Decklaufflächengummis bei 20 °C, wobei die Härte (Hs cap) des Decklaufflächengummis mit einem Typ-A-Durometer bei einer Temperatur von 20 °C gemäß JIS K6253 gemessen wird, und ein Speichermodul (E'carcass) des Karkassenbeschichtungsgummis bei 20 °C, wobei der Speichermodul (E'carcass) des Karkassenbeschichtungsgummis ein Speichermodul ist, das mit einem Viskoelastizitätsspektrometer bei 20 °C gemäß JIS K6394 unter den Bedingungen von 10 % Anfangsbeanspruchung, $\pm$ 2 % Amplitude und 20 Hz Frequenz gemessen wird, wobei es eine nachstehende Formel erfüllt:

$$5 \leq (\text{Hs cap})/(\text{E'carcass}) \leq 15.$$

2. Luftreifen gemäß Anspruch 1, wobei das Mischverhältnis des Naturkautschuks von 30 bis 90 Massenteile pro 100 Massenteile der Dienkautschuke beträgt.

3. Luftreifen gemäß Anspruch 1, wobei das Mischverhältnis des Naturkautschuks von 50 bis 90 Massenteile pro 100 Massenteile der Dienkautschuke beträgt.

4. Luftreifen gemäß Anspruch 1, wobei das Mischverhältnis des Rußes von 30 bis 75 Massenteile pro 100 Massenteile der Dienkautschuke beträgt.

5. Luftreifen gemäß Anspruch 1, wobei das Mischverhältnis des Rußes von 35 bis 70 Massenteile pro 100 Massenteile der Dienkautschuke beträgt.

6. Luftreifen nach Anspruch 1, wobei die stickstoffadsorptionsspezifische Oberfläche ($N_2$SA) des Rußes 50 bis 140 m$^2$/g beträgt.

7. Luftreifen nach Anspruch 1, wobei die Karkassenlage organische Fasern umfasst, und die organischen Fasern aus Polyethylenterephthalat oder Rayon hergestellt sind.

8. Luftreifen nach Anspruch 1, wobei eine Dicke der einzigen Karkassenlage von 0,70 mm bis 1,80 mm beträgt.

9. Luftreifen nach Anspruch 1, wobei die Härte (Hs cap) des Decklaufflächengummis bei 20 °C und der Speichermodul (E'carcass) des Karkassenbeschichtungsgummis bei 20 °C eine nachstehende Formel erfüllen:

$$5 \leq (Hs\ cap)/(E'carcass) \leq 14.$$

10. Luftreifen nach Anspruch 1, wobei die Härte (Hs cap) des Decklaufflächengummis bei 20 °C und der Speichermodul (E'carcass) des Karkassenbeschichtungsgummis bei 20 °C eine nachstehende Formel erfüllen:

$$5 \leq (Hs\ cap)/(E'carcass) \leq 13.$$

**Revendications**

1. Bandage pneumatique comprenant :

   au moins un pli de carcasse unique ;
   un caoutchouc d'enrobage de carcasse qui recouvre le pli de carcasse ; et
   un caoutchouc de bande de roulement disposé sur un côté extérieur de la nappe de carcasse dans la direction radiale de pneumatique,
   le pli de carcasse unique ayant une épaisseur comprise entre 0,50 mm et 2,00 mm,
   le caoutchouc de revêtement de carcasse comprenant du caoutchouc naturel et un caoutchouc copolymère styrène-butadiène en tant que caoutchoucs diéniques et du noir de carbone ayant une zone de surface spécifique d'adsorption d'azote ($N_2SA$) de 35 à 140 $m^2$/g en tant que charge, dans lequel la surface spécifique d'adsorption d'azote ($N_2SA$) est une valeur mesurée conformément à la norme JIS K6217-2:2001 "Partie 2 : Détermination de la surface spécifique - Procédés d'adsorption d'azote - Procédures en un point",
   un rapport de mélange du caoutchouc naturel de 20 parties en masse ou plus et un rapport de mélange du noir de carbone de 25 parties en masse ou plus, pour 100 parties en masse des caoutchoucs diéniques, et
   une dureté (Hs cap) du caoutchouc de la bande de roulement à 20 °C, dans lequel la dureté (Hs cap) du caoutchouc de la bande de roulement est mesurée avec un duromètre de type A à une température de 20 °C conformément à la norme JIS K6253, et un module de stockage (E'carcass) du caoutchouc de l'enrobage de la carcasse à 20 °C, dans lequel le module de stockage (E'carcass) du caoutchouc de revêtement de la carcasse est un module de stockage mesuré avec un spectromètre de viscoélasticité à 20 °C conformément à la norme JIS K6394 dans des conditions de déformation initiale de 10 %, d'amplitude de $\pm$ 2 % et de fréquence de 20 Hz, satisfaisant à la formule ci-dessous :

$$5 \leq (Hs\ cap)\ /\ (E'carcass) \leq 15.$$

2. Bandage pneumatique selon la revendication 1, dans lequel le rapport de mélange du caoutchouc naturel va de 30 à 90 parties en masse pour 100 parties en masse du composant caoutchouc.

3. Bandage pneumatique selon la revendication 1, dans lequel le rapport de mélange du caoutchouc naturel va de 50 à 90 parties en masse pour 100 parties en masse des caoutchoucs diéniques.

4. Bandage pneumatique selon la revendication 1, dans lequel le rapport de mélange du noir de carbonne va de 30 à 75 parties en masse pour 100 parties en masse des caoutchoucs diéniques.

5. Bandage pneumatique selon la revendication 1, dans lequel le rapport de mélange du noir de carbone va de 35 à 70 parties en masse pour 100 parties en masse des caoutchoucs diéniques.

6. Bandage pneumatique selon la revendication 1, dans lequel la surface spécifique d'adsorption d'azote ($N_2SA$) du noir de carbone est comprise entre 50 et 140 $m^2$/g.

7. Bandage pneumatique selon la revendication 1, dans lequel la nappe de carcasse comprend des fibres organiques, et les fibres organiques sont en polyéthylène téréphtalate ou en rayonne.

8. Bandage pneumatique selon la revendication 1, dans lequel l'épaisseur de la nappe de carcasse unique est comprise entre 0,70 mm et 1,80 mm.

9. Bandage pneumatique selon la revendication 1, dans lequel la dureté (Hs cap) de la gomme de bande de roulement à 20 °C et le module de stockage (E'carcass) de la gomme d'enrobage de carcasse à 20 °C répondent à la formule ci-dessous :

$$5 \leq (Hs\ cap)/(E'carcass) \leq 14.$$

10. Bandage pneumatique selon la revendication 1, dans lequel la dureté (Hs cap) de la gomme de bande de roulement à 20 °C et le module de stockage (E'carcass) de la gomme d'enrobage de carcasse à 20 °C répondent à la formule ci-dessous :

$$5 \leq (Hs\ cap)/(E'carcass) \leq 13.$$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007253708 A
- JP 2014080074 A
- WO 2014002631 A
- JP 2006168595 B